# EUROPEAN PATENT APPLICATION

(11) **EP 4 737 688 A1**
(43) Date of publication of application: **06.05.2026**
(21) Application number: 25212561.2
(22) Date of filing: 31.10.2025
(51) Int. Cl.: F01D 5/28, B22F 5/04, C04B 35/80, F01D 9/04, F01D 17/16, F01D 25/24, B22F 5/00

(54) **TURBINE ENGINE FOR AN AIRCRAFT HAVING AN INTEGRAL FRAME**

(30) Priority: 01.11.2024 US 202463715150 P
(71) Applicant: General Electric Company, Cincinnati, Ohio 45215 (US)
(72) Inventor: WU, Wei, Evendale, 45241 (US); XIE, Ming, Evendale, 45215 (US); GLYNN, Christopher, Evendale, 45241 (US); KUROPATWA, Michal, 02-256 Warsaw (PL)
(74) Representative: Openshaw & Co.

(57) **Abstract**

A turbine engine (100) for an aircraft includes an integral frame. The integral frame includes an inner hub (240), a frame case (220) having an outer band portion (222) and a containment portion (224) integrally formed with the outer band portion (222), and a plurality of struts (210) connecting the inner hub with the outer band portion. The outer band is opposite the inner hub to form an air flow path (187) therebetween, and the containment portion extends in an axial direction of the turbine engine away from the outer band. The containment portion is positioned radially outward of a plurality of rotating airfoils (262) and extends axially over the plurality of rotating airfoils. The outer band portion and the containment portion of the frame case can be an integral composite having a plurality of reinforcing fibers (272) embedded in a matrix (270) or an integral metallic part.

## Description

### CROSS REFERENCE TO RELATED APPLICATIONS

The present application claims the benefit of U.S. Provisional Patent Application No. 63/715,150, filed on November 1, 2024, which is hereby incorporated by reference herein in its entirety.

### TECHNICAL FIELD

The present disclosure relates to frames for turbine engines, particularly, turbine engines for aircraft.

### BACKGROUND

Turbine engines used in aircraft generally include a fan, a compressor section, a combustion section, and a turbine section. A combustor of the combustion section generates combustion gases for driving one or more turbines of the turbine section, and the turbine can be used to drive the fan. A portion of air flowing into the fan flows through the compressor section, a combustion section, and a turbine section as core air, and another portion of the air flowing into the fan bypasses these sections and flows through the turbine engine as bypass air. The compressor section can include one or more compressors, also be driven by the turbine, to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numerals generally indicate identical elements or elements that are structurally similar or functionally similar.
FIG. 1 is a schematic, cross-sectional view of a turbine engine of for an aircraft.
FIG. 2A is a cross-sectional view of a portion of the turbine engine, showing detail 2A in FIG. 1.
FIG. 2B is a cross-sectional view of a portion of the turbine engine taken from a perspective similar to that of detail 2A in FIG. 1.
FIG. 3 is a cross-sectional view of a shiplap joint for an integral frame that can be used in the engine shown in FIG. 1.
FIG. 4 is a cross-sectional view of a shiplap joint for an integral frame that can be used in the engine shown in FIG. 1.
FIG. 5 is a cross-sectional view of a shiplap joint for an integral frame that can be used in the engine shown in FIG. 1.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "fastened" as used herein, refers to securely attaching or joining two or more components together using mechanical means, such as screws, bolts, adhesives, brazing, soldering, or other methods, to ensure stability and integrity in their assembled state.

The term "monolithic" as used herein, in connection with a component or a structure, refers to a component or a structure that is formed from a single piece of material, like a metal sheet, without joints or seams.

The term "integral" as used herein, in connection with a component or a structure, refers to a component or a structure that is formed as a single, unified component or structure. Other components may be fastened to the integral structure or the component, but the integral component or the structure itself does not include fastened components or structures. A monolithic component or structure is an integral component or structure.

As used herein, the terms "additively manufactured" and "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology can be described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, the methods and structures disclosed herein may be practiced with any additive manufacturing technique or manufacturing technology. For example, embodiments of the present disclosure may use layer-additive processes, layer-subtractive processes, or hybrid processes.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), and a metal matrix composite (MMC). The composite may be formed of a matrix material and a reinforcing element or reinforcing material, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that is formed into a bundle.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength. One or more layers of adhesive can be used in forming or coupling composite components. The adhesive can require curing at elevated temperatures or other hardening techniques.

As used herein, a "preform" refers to a shaped or shapeable arrangement of reinforcing fibers configured to define at least a portion of the composite component prior to resin infiltration, curing, or consolidation. The reinforcing fibers can be provided in different forms, including, but not limited to, two-dimensional woven fabrics, three-dimensional woven fabrics, braided fabrics, stitched fabrics, knitted fabrics, non-woven mats, unidirectional tapes, or combinations thereof. A preform can include multiple layers or plies, may incorporate stitching, binder materials, or tackifiers to maintain a desired geometry, and may be near-net shaped or provided as a portion of an assembly or a subassembly for subsequent processing.

As used herein, PMC refers to a class of materials and, more specifically, a class of composite materials using a polymer matrix material. Resins can be used as matrix materials for PMCs and can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

The PMC material may be a prepreg. A prepreg is a reinforcing material (e.g., a reinforcing fiber) pre-impregnated with the polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Instead of using a prepreg with thermoplastic polymers, another non-limiting example utilizes dry reinforcing fibers. The dry reinforcing fibers can be positioned to form a preform. For example, the reinforcing fibers and, more specifically, reinforcing fiber tows may be woven together as a woven fabric. Woven fabrics can include, but are not limited to, dry carbon fibers woven together exclusively or woven together with polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include braided material, woven material, or any combination thereof. Resin can be pumped into or otherwise provided to the mold or the cavity to impregnate the dry fibers. The combination of the impregnated fibers and the resin is then cured and removed from the mold. As noted above, the matrix material can include thermoplastic and thermoset resins. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

The term "metallic" as used herein is indicative of a material that is metal-based including metals, such as, but not limited to, titanium, iron, aluminum, stainless steel, and nickel alloys. A metallic material or a metal alloy can be a combination of at least two or more elements or materials, where at least one is a metal.

As used herein, an alloy is "based" on a particular element when that element is present in the alloy at the greatest weight percent, by total weight of the alloy, of all elements contained in the alloy. For example, an iron-based alloy has a higher weight percentage of iron than any other single element present in the alloy.

A turbine engine for an aircraft can include various airflow paths. Such airflow paths may be defined, at least in part, by a plurality of casing structures. To form the airflow paths, adjacent casing structures can be attached to one another. The more casing structures used to define the airflow path, the more joints are required to join these casing structures, increasing the complexity of the turbine engine and the weight of the turbine engine, which is a consideration in the design of turbine engines for aircraft. The turbine engine can also include a rotating airfoil assembly, such as a fan or a compressor rotor, that includes rotating airfoils. A casing can circumscribe the rotating airfoils. In addition to defining a portion of the airflow path, this casing can be a containment structure that is used to retain broken blades or blade fragments therein. Additionally, the turbine engine can include a frame that supports various components and defines a portion of the airflow path. Disclosed herein is a frame that is integrally formed with adjacent casing structures, reducing the weight and the complexity of the casings defining the airflow path. More specifically, the frame includes an outer band that is integrally formed with adjacent casing structures, such as a containment casing that circumscribes a rotating airfoil assembly, such as a fan. Also discussed herein are various joints, such as shiplap joints that can be used to join the integral frame, such as the containment casing portion, with an adjacent casing.

As noted above, certain components of gas turbine engines, particularly, those used in aircraft, can be made from composite materials. Such components can include, for example, various frames, struts, airfoils, housing structures, and casing structures. For example, the casing circumscribing a rotating airfoil assembly, such as a fan or a compressor rotor, includes rotating airfoils can be a composite material. A casing comprising a composite material provides significant weight savings for use in a turbine engine for an aircraft. Similarly, a frame for the engine can comprise a composite material. Composite materials can be used to form the integral frame structures disclosed herein and the joints described herein can be used with these composite casings.

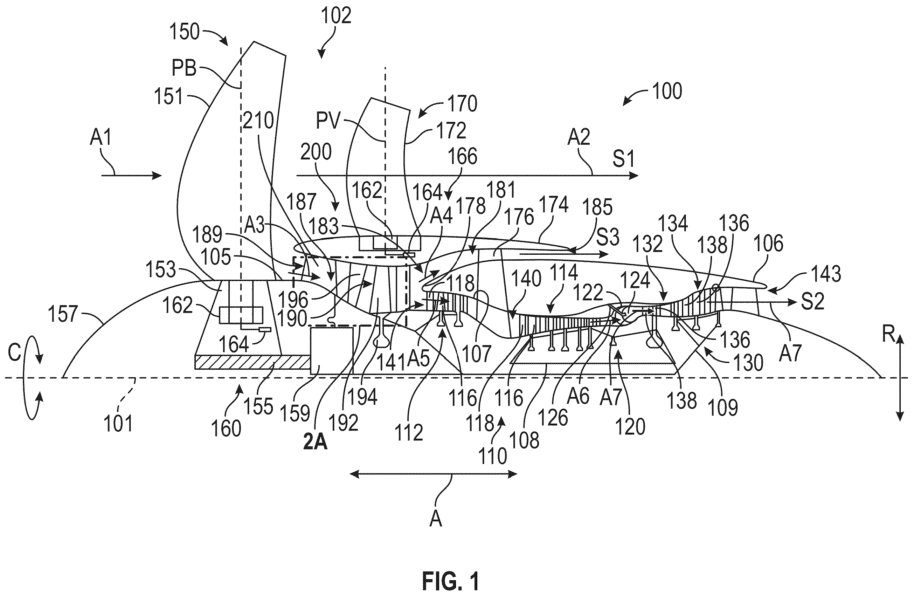

FIG. 1 is a schematic, cross-sectional view a turbine engine 100 that can be used on an aircraft. The turbine engine 100 has an axial direction A (extending parallel to a longitudinal centerline (axis) 101, shown for reference in FIG. 1), a radial direction R, and a circumferential direction C. The circumferential direction C extends in a direction rotating about the longitudinal centerline (axis) 101 (the axial direction A). In the embodiment depicted in FIG. 1, the turbine engine 100 is an unducted fan engine or an open fan engine. The turbine engine 100 is a "three-stream engine" having three distinct streams (labeled S1, S2, and S3 in FIG. 1) of thrust-producing airflow during operation, as detailed further below. The turbine engine 100 includes a fan section 102.

The turbine engine 100 depicted in FIG. 1 includes, in serial flow relationship, a compressor section 110, a combustion section 120, and a turbine section 130. The compressor section 110, the combustion section 120, and the turbine section 130 are disposed downstream from the fan section 102. The compressor section 110, the combustion section 120, and the turbine section 130 are substantially enclosed within a core cowl 106 that is substantially tubular and annularly surrounds the compressor section 110, the combustion section 120, and the turbine section 130. The core cowl 106 defines a core inlet 141 and, in this embodiment, the core inlet 141 is annular. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbine engine 100 further includes a core air exhaust nozzle 143 (also referred to as a jet exhaust nozzle) that is downstream of the turbine section 130. The compressor section 110, the combustion section 120, and the turbine section 130, together, define, at least in part, a core air flow path, also referred to as a core duct 140, extending from the core inlet 141 to the core air exhaust nozzle 143, and through which core air A5 flows. As will be discussed in more detail below, the turbine engine 100 includes a high-pressure (HP) shaft 108, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotates relative to a corresponding plurality of static compressor vanes 118 (also called nozzles) to compress or to pressurize the core air A5 passing through the stage. In a single compressor stage, the plurality of compressor blades 116 can be provided in a ring, extending radially outwardly relative to the longitudinal centerline (axis) 101 from a blade platform to a blade tip (e.g., extend in the radial direction R). The compressor blades 116 can be a part of a compressor rotor that includes a disk, with compressor blades 116 extending radially from the disk. Other configurations of the compressor rotor can be used, including, for example, blisks where the disk and the compressor blades 116 are integrally formed with each other to be a single piece. The corresponding static compressor vanes 118 are positioned upstream of and adjacent to the rotating compressor blades 116. The compressor vanes 118 for a stage of the compressor can be mounted to a core casing 107 in a circumferential arrangement. The core casing 107 may define, at least in part, the core air flow path (the core duct 140). Each compressor stage can be used to sequentially compress the core air A5 flowing through the core air flow path (the core duct 140), generating compressed air A6. Any suitable number of compressor blades 116, compressor vanes 118, and compressor stages can be used.

Each of the HP turbine 132 and the LP turbine 134 also may include a plurality of turbine stages. In each stage, a plurality of turbine blades 136 rotates relative to a corresponding plurality of static turbine vanes 138 (also called a nozzle) to extract energy from combustion gases A7 passing through the stage. The turbine blades 136 can be a part of a turbine rotor. Any suitable configuration for a turbine rotor can be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air A6 from the compressor section 110 to form a fuel and air mixture, and combusted, generating combustion products (i.e., combustion gases A7). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases A7 are discharged from the combustion chamber 124. These combustion gases can be directed into the turbine blades 136 of the HP turbine 132 and, then, the turbine blades 136 of the LP turbine 134, and the combustion gases A7 drive (rotate) the turbine blades 136 of the HP turbine 132 and the LP turbine 134. Any suitable number of turbine blades 136, turbine vanes 138, and turbine stages can be used. After flowing through the turbine section 130, the combustion gases A7 are exhausted from the turbine engine 100 through the core air exhaust nozzle 143 to provide propulsive thrust.

The turbine engine 100 further includes one or more drive shafts. As noted above, the HP shaft 108 drivingly connecting the HP turbine 132 to the HP compressor 114, and the LP shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases A7 are routed into the HP turbine 132 and expanded through the HP turbine 132 where a portion of the kinetic energy from the combustion gases A7 is extracted via the one or more stages of the turbine blades 136 and turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases A7 do work on the HP turbine 132. The combustion gases A7 are then routed into the LP turbine 134 and expanded through the LP turbine 134. Here, a second portion of the kinetic energy is extracted from the combustion gases A7 via one or more stages of the turbine blades 136 and the turbine vanes 138 of the LP turbine 134. This causes the LP shaft 109 to rotate, which supports operation of the LP compressor 112 (self-sustaining cycle), and rotating the compressor rotors and, thus, the compressor blades 116 of the LP compressor 112 via the LP shaft 109. In this way, the combustion gases A7 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is disposed radially outward of the LP shaft 109. The HP shaft 108 and the LP shaft 109 are rotatable about the longitudinal centerline (axis) 101 and, as discussed above, coupled to rotatable elements such as the compressor rotors and the turbine rotors.

The fan section 102 shown in FIG. 1 includes a fan, which is referred to herein as a primary fan 150. In the depicted embodiment, the primary fan 150 is an open rotor fan, also referred to as an unducted fan. The primary fan 150 has a plurality of primary fan blades 151 coupled to a fan disk 153. As depicted in FIG. 1, the primary fan blades 151 extend outwardly from the fan disk 153 generally along the radial direction R. One primary fan blade 151 is depicted in FIG. 1, but the plurality of primary fan blades 151 can be arranged in equal spacing around the longitudinal centerline axis 101. The primary fan blades 151 and the fan disk 153 are rotatable, together, about the longitudinal centerline (axis) 101 by a fan shaft 155. The fan disk 153 is covered by a fan hub 157 that is aerodynamically contoured to promote an airflow through the plurality of primary fan blades 151. In this embodiment, the fan hub 157 is rotatable together with the primary fan blades 151 and the fan disk 153.

As shown in FIG. 1, the fan shaft 155 is coupled with the LP shaft 109 via a speed reduction gearbox or a power gearbox, also referred to as a gearbox assembly 159. The LP shaft 109 is thus driving coupled to the primary fan. The gearbox assembly 159 is shown schematically in FIG. 1. The gearbox assembly 159 includes a plurality of gears for adjusting the rotational speed of the fan shaft 155 and, thus, the rotational speed of the primary fan 150 relative to the rotational speed of the LP shaft 109. The gearbox assembly 159 can be used to reduce the rotational speed to a speed that more efficient for the primary fan 150. The gearbox assembly 159 may have a gear ratio of 4:1 to 12:1, or 7:1 to 12:1, or 4:1 to 10:1, or 5:1 to 9:1, or 6:1 to 9:1, and can be configured in an epicyclic star configuration or a planet gear configuration. The gearbox assembly can have a gear ratio of 4:1 to 10:1 for the unducted fan engine (e.g., the turbine engine 100). The gearbox can be a single stage gearbox or a compound gearbox (e.g., having a plurality of stages).

In the case of a variable pitch fan, as depicted in FIG. 1, for example, the plurality of primary fan blades 151 is rotatable relative to the fan disk 153 about a fan blade pitch axis PB. Each of the primary fan blades 151 can be connected to the fan disk 153 by a pitch bearing 162 that allows for rotation of the primary fan blades 151 about the pitch axis PB. The primary fan blades 151 are rotatable within the pitch bearing 162 by a pitch actuator 164 operatively coupled to the primary fan blades 151 to vary the pitch of a corresponding primary fan blades 151. One or more pitch actuators 164 can be used, and, in some embodiments, the pitch actuators 164 rotate the primary fan blades 151 in unison. A fan actuation system 160 controls the one or more pitch actuators 164 to change the pitch the primary fan blades 151 about their respective pitch axis PB. The fan actuation system 160 can be disposed within the fan hub 157. Additionally, or alternatively, portions of the fan actuation system 160 can be disposed within an inner hub housing 105. The gearbox assembly 159 and other portions of the primary fan 150 can be disposed within the inner hub housing 105.

The fan section 102 includes a plurality of fan guide vanes 172 (only one shown in FIG. 1). The fan guide vanes 172 are circumferentially spaced and disposed around the longitudinal centerline axis 101 as part of a fan guide vane array 170. In the embodiment depicted in FIG. 1, the fan guide vanes 172 are static airfoils and are not rotatable about the longitudinal centerline (axis) 101. Each fan guide vane 172 is mounted to a fan cowl 174 and extends outwardly from the fan cowl 174 generally along the radial direction R. In the case of a variable pitch fan, as depicted in FIG. 1, for example, the plurality of fan guide vanes 172 is rotatable relative to the fan cowl 174 about a fan guide vane pitch axis PV. A fan guide vane actuation system 166 can be used to change the pitch of the fan guide vanes 172. The fan guide vane actuation system 166 can operate similarly to the fan actuation system 160, discussed above, and that discussion applies here. The same reference numerals are thus used for the pitch bearings 162 and the pitch actuators 164 of the fan guide vane actuation system 166.

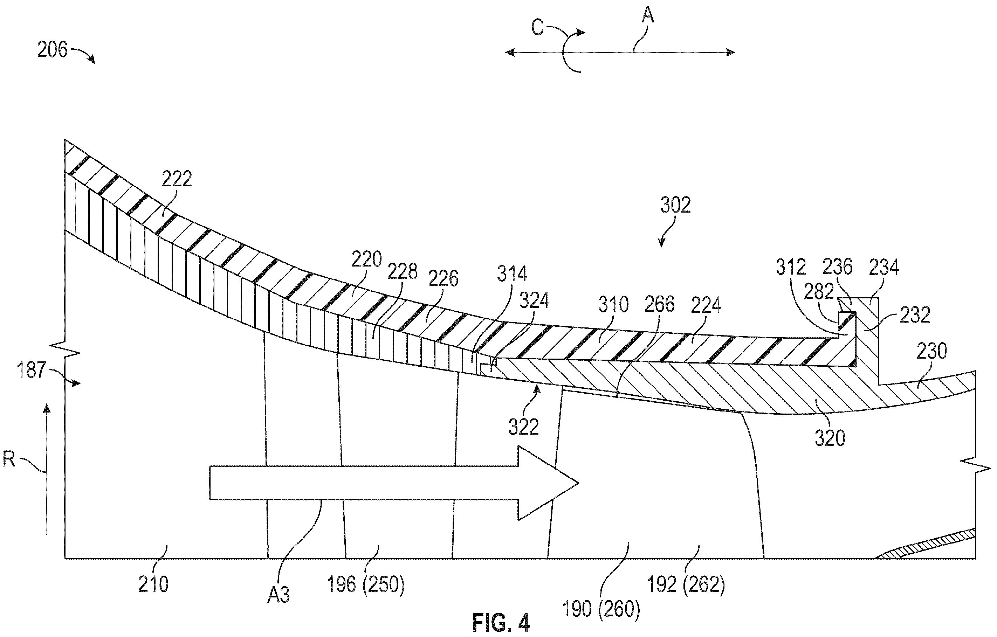

The fan cowl 174 annularly encases at least a portion of the core cowl 106 and is generally positioned outward of the core cowl 106 along the radial direction R. Together, the fan cowl 174 and the core cowl 106 define an outer casing of the turbine engine 100. A downstream section of the fan cowl 174 extends over a forward portion of the core cowl 106 to define a fan flow path, also referred to as a fan duct 181. Incoming air enters through the fan duct 181 through a fan duct inlet 183 and exits through a fan exhaust nozzle 185 to produce propulsive thrust. The fan duct 181 is an annular duct positioned generally outward of the core duct 140 along the radial direction R. The fan cowl 174 and the core cowl 106 are connected together and supported by a plurality of struts 176 (only one shown in FIG. 4). The struts 176 are circumferentially spaced about longitudinal centerline (axis) 101 and extend radially outward from the core cowl 106. Each strut of the plurality of struts 176 is aerodynamically contoured to direct air flowing thereby.

The turbine engine 100 includes an inlet duct 187. The inlet duct 187 extends between an engine inlet 189, the core inlet 141, and the fan duct inlet 183. The engine inlet 189 is defined generally at the forward end of the fan cowl 174, and is positioned between the primary fan 150 and the fan guide vanes 172 along the axial direction A. The inlet duct 187 is an annular duct that is positioned inward of the fan cowl 174 along the radial direction R. Air flowing downstream along the inlet duct 187 is split, not necessarily evenly, into the core duct 140 and the fan duct 181 by a splitter 178 of the core cowl 106. The inlet duct 187 is wider than the core duct 140 in the radial direction R. The inlet duct 187 is also wider than the fan duct 181 in the radial direction R.

The fan section 102 also includes a mid-fan 190. The mid-fan 190 includes a plurality of mid-fan blades 192 (only one shown in FIG. 4). The plurality of mid-fan blades 192 is rotatable about the longitudinal centerline axis 101. In the depicted embodiment, the mid-fan 190 is drivingly coupled with the LP turbine 134 via the LP shaft 109. The plurality of mid-fan blades 192 can be arranged in equal circumferential spacing about the longitudinal centerline axis 101. The mid-fan blade 192 can be a part of a rotor that includes a central hub, such as a disk 194, and each mid-fan blade 192 of the plurality of mid-fan blades 192 extends radially from the disk 194. Other configurations of the compressor rotor can be used, including, for example, blisks where the disk 194 and the mid-fan blades 192 are integrally formed with each other to be a single piece.

The plurality of mid-fan blades 192 is annularly surrounded (e.g., ducted) by the fan cowl 174. In this regard, the mid-fan 190 is positioned inward of the fan cowl 174 along the radial direction R. The mid-fan 190 is positioned within the inlet duct 187 upstream of both the core duct 140 and the fan duct 181. A ratio of a span of a primary fan blades 151 to that of a mid-fan blade 192 (a span is measured from a root to a tip of the respective blade) is greater than two and less than ten to achieve the desired benefits of the third stream (S3), particularly, the additional thrust the third stream (S3) offers to the engine, which can enable a smaller diameter primary fan blade 151. A plurality of inlet mid-fan vanes 196 is positioned upstream of and adjacent to the rotating mid-fan blade 192. The inlet mid-fan vanes 196 can be mounted to the fan cowl 174 in a circumferential arrangement.

The fan cowl 174 can also be connected to the inner hub housing 105 and supported by a frame, such as an integral frame 200. The integral frame 200 can include a plurality of struts 210 (only one shown in FIG. 1). The struts 210 are circumferentially spaced about the longitudinal centerline axis 101 and extend radially outward from the inner hub housing 105. Each strut of the plurality of struts 210 is aerodynamically contoured to direct air flowing thereby.

During operation of the turbine engine 100, an initial airflow or an incoming air A1 passes through the primary fan blades 151 of the primary fan 150 and splits into a first airflow (a first portion of air, which is referred to herein as primary bypass air A2) and a second airflow (a second portion of air, which is referred to herein as engine air A3). The primary bypass air A2 bypasses the engine inlet 189 and flows generally along the axial direction A outward of the fan cowl 174 along the radial direction R. The primary bypass air A2 is accelerated by the primary fan blades 151 and passes through the fan guide vanes 172. The primary bypass air A2 then continues downstream to produce a primary propulsion stream or a first thrust stream S1. A majority of the net thrust produced by the turbine engine 100 is produced by the first thrust stream S1.

The engine air A3 is directed or routed into the inlet duct 187 and enters the inlet duct 187 through the engine inlet 189. The engine air A3 flowing downstream through the inlet duct 187 flows through the mid-fan blades 192 of the mid-fan 190 and is compressed by the rotating mid-fan blade 192. After flowing through the mid-fan blade 192, the engine air A3 is split by the splitter 178 into a third airflow (a third portion of air, which is referred to herein as secondary bypass air A4) and a fourth airflow (a fourth portion of air, which is referred to herein as core air A5). The core air A5 is directed or is routed into an upstream section of the core duct 140, or, more specifically, into the core inlet 141. The core air A5 flows through the core duct 140 (as discussed above) to generate combustion gases A7 and exits the core duct 140 through the core air exhaust nozzle 143 to produce a core air stream, also referred to as a second thrust stream S2.

The secondary bypass air A4 is directed or routed into the fan duct 181 and enters the fan duct 181 through the fan duct inlet 183. The secondary bypass air A4 flows generally along the axial direction A through the fan duct 181 and is exhausted from the fan duct 181 through the fan duct inlet 183 to produce a third stream, also referred to as a third thrust stream S3. The third thrust stream S3 is a secondary air stream that increases fluid energy to produce a minority of total propulsion system thrust. In some embodiments, a pressure ratio of the third stream is higher than that of the primary propulsion stream (e.g., a bypass or a propeller driven propulsion stream). The thrust can be produced through a dedicated nozzle or through mixing of the secondary air stream with the primary propulsion stream or a core air stream, e.g., into a common nozzle. In certain embodiments, an operating temperature of the secondary air stream is less than a maximum compressor discharge temperature for the engine. Furthermore, in certain embodiments, aspects of the third stream (e.g., airstream properties, mixing properties, or exhaust properties), and, thereby, a percent contribution to total thrust, are passively adjusted during engine operation or can be modified purposefully through the use of engine control features (such as fuel flow, electric machine power, variable stators, variable inlet guide vanes, valves, variable exhaust geometry, or fluidic features) to adjust or to improve overall system performance across a broad range of potential operating conditions.

The turbine engine 100 shown in FIG. 1 and discussed herein (e.g., an unducted fan engine) is provided by way of example only. In other embodiments, any other suitable engine can be utilized with aspects of the present disclosure. For example, in other embodiments, the engine can be any other suitable gas turbine engine, such as a high bypass turbofan engine, a turboshaft engine, a turboprop engine, a turbojet engine, and the like. In such a manner, in other embodiments, the gas turbine engine may have other suitable configurations, such as other suitable numbers or arrangements of shafts, compressors, turbines, fans, etc. Further, although the turbine engine 100 is shown as a geared, variable pitch turbofan engine, in other embodiments, the turbine engine 100 can be a direct drive turbine engine or can be a fixed-pitch turbine engine. In other embodiments, the primary fan 150 and the fan guide vane array 170 can be ducted or shrouded, including a nacelle or a shroud that circumferentially surrounds one or both of the primary fan 150 and the fan guide vane array 170, either collectively or individually.

The turbine engine 100 discussed herein is suitable for use on aircraft. Suitable aircraft include, for example, airplanes and unmanned aerial vehicles (UAV). In other embodiments, the turbine engine can be any other turbine engine, such as an industrial turbine engine incorporated into a power generation system, or a nautical turbine engine on a ship or other vessel.

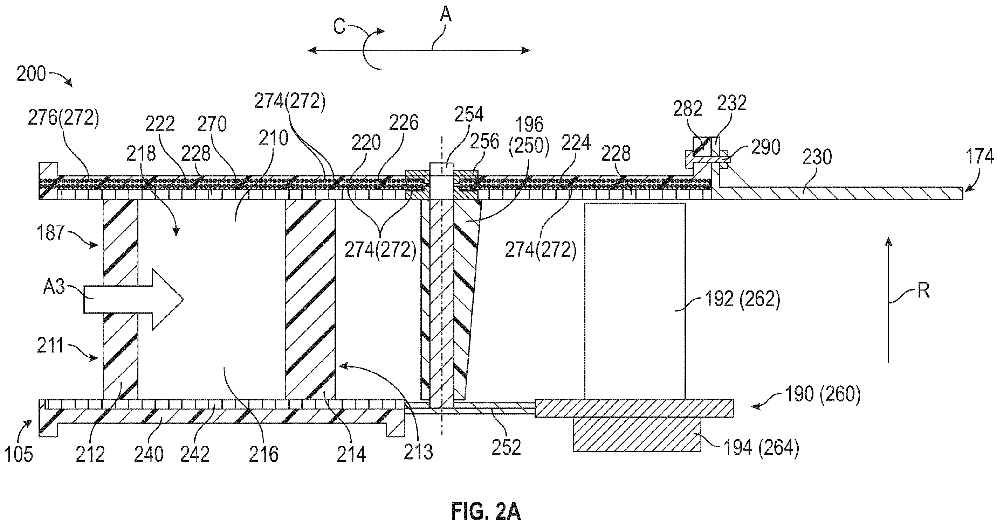

FIG. 2A is a cross-sectional view of a portion of the inlet duct 187, including the mid-fan blade 192 and integral frame 200, showing detail 2A in FIG. 1. As noted above, the fan cowl 174 defines, in part, the inlet duct 187 and circumferentially surrounds the mid-fan blades 192. More specifically, the fan cowl 174 can include one or more casings or casing segments to define the inlet duct 187. The integral frame 200 includes a frame case 220, and the frame case 220 is one of the casings that defines the inlet duct 187. Another casing, which is referred to herein as a guide case 230, is connected, such as directly connected, to the frame case 220. The guide case 230 shown in FIG. 2A is a downstream case disposed downstream of the frame case 220 relative to the flow of the engine air A3 through the inlet duct 187. Additional details of the connection between the frame case 220 and the guide case 230 will be discussed below and such features can apply to a guide case positioned upstream of the frame case 220.

Similarly, the inner hub housing 105 can include one or more casings or casing segments positioned opposite the casing segments of the fan cowl 174 to define the inlet duct 187 therebetween. The integral frame 200 also includes an inner hub 240, and the inner hub 240 is one of the casings that defines the inlet duct 187. In FIG. 2A, another inner casing, which is referred to herein as an inner vane case 252 is disposed adjacent to the inner hub 240 and can be connected thereto. In FIG. 2A, the inner vane case 252 is a downstream case disposed downstream of the inner hub 240 relative to the flow of the engine air A3 through the inlet duct 187. An outer band portion 222 is opposite the inner hub 240 to form an air flow path therebetween, such as a portion of the inlet duct 187. Both the frame case 220, including the outer band portion 222, and the inner hub 240 extend circumferentially about a frame centerline axis, which is congruent to the longitudinal centerline axis 101 (FIG. 1) of the turbine engine 100, and extends in the axial direction A (FIG. 1). Each strut 210 connects the inner hub 240 with the outer band portion 222, and extends between the outer band portion 222 and the inner hub 240. The struts 210 are circumferentially spaced apart from one another about the frame centerline axis. The struts 210 can be hollow, and one or more of the struts 210 can have a passage (not labeled) for service lines, such as wiring harnesses and fluid pipes, to pass from the nacelle fan cowl 174 (FIG. 1), though the struts 210, and into the fan section 102, the inner hub housing 105, the core cowl 106, or any combination thereof.

Each strut 210 can include a leading edge 211 formed on a leading portion 212 of the strut 210 and a trailing edge 213 formed on a trailing portion 214 of the strut 210. The strut 210 includes a first wall 216 and a second wall (not shown), each connecting the leading portion 212 with the trailing portion 214. The second wall is positioned opposite the first wall 216 to form outer axial sides of the strut 210. As noted above, the strut 210 can be hollow and a cavity 218 can be defined between the first wall 216 and the second wall, and between the leading portion 212 and the trailing portion 214.

The portion of the inlet duct 187 shown in FIG. 2A also includes a rotating airfoil assembly 260 including a plurality of rotating airfoils 262 collectively rotatable about a rotational axis. The rotating airfoil assembly 260 shown in FIG. 2A is the mid-fan 190, with the rotating airfoils 262 being the mid-fan blades 192. The following discussion will reference the mid-fan 190, but the integral frame 200 can be used in other locations within the turbine engine 100 (FIG. 1) and with other rotating airfoil assemblies 260 other than the mid-fan 190. The mid-fan 190 can be position either upstream or downstream of the integral frame 200. As shown in FIG. 2A, for example, the mid-fan blades 192 of the mid-fan 190 are located in the inlet duct 187 at a position downstream of the strut 210 of the integral frame 200, relative to the flow of engine air A3. The rotating airfoil assembly 260 includes a disk 264, such as disk 194, and the disk 264, or portions thereof, can also define, in part, the inlet duct 187.

As noted above, the frame case 220 includes a containment portion 224. The containment portion 224 is disposed radially outward of the mid-fan blades 192 and extends axially over the mid-fan blades 192. The containment portion 224 is positioned opposite the mid-fan blades 192 and defines the inlet duct 187 therebetween. The containment portion 224 can be a fan case. The containment portion 224 can be part of a blade containment system that is used to retain broken blades or blade fragments therein.

The integral frame 200 can be formed from composite materials, such as PMC materials, and can be a composite frame. The integral frame 200 can include a matrix 270 and a plurality of reinforcing fiber tows 272 embedded in the matrix 270. For clarity only a portion of the reinforcing fiber tows 272 are schematically shown in FIG. 2A, and any of the portions described herein can include the matrix 270 and the reinforcing fiber tows 272 arranged as discussed herein. When the composite material is a PMC material, the matrix 270 is a polymer and the reinforcing fiber tows 272 can be formed from one or more of the various reinforcing fiber tows discussed above, such as carbon fibers.

The reinforcing fiber tows 272 can include, for example, a plurality of circumferential reinforcing fiber tows 274 that extend in the circumferential direction C of the turbine engine 100 (FIG. 1) and a plurality of axial reinforcing fiber tows 276 that extend in the axial direction A of the turbine engine 100. These reinforcing fiber tows 272 can be laid-up to form a preform using various suitable layup techniques including wrapping the reinforcing fiber tows 272 around a mandrel and using one or more woven fabrics. When woven fabrics are used, the circumferential reinforcing fiber tows 274 and the axial reinforcing fiber tows 276 are interwoven with each other. Suitable woven fabrics include both two-dimensional (2D) woven fabrics and three-dimensional (3D) woven fabrics. When 3D woven fabrics are used, the reinforcing fiber tows 272 can include interlocking reinforcing fiber tows (not shown) to interlock the plurality of layers of reinforcing fiber tows 272 together.

The containment portion 224 circumscribes the mid-fan 190, and the circumferential reinforcing fiber tows 274 can extend around the mid-fan 190 in the circumferential direction C. When the circumferential reinforcing fiber tows 274 are formed from carbon fibers or other similar fibers, the circumferential reinforcing fiber tows 274 provide strength, particularly, impact strength, to the containment portion 224, allowing the fan casing containment portion 224 to be a containment barrier for the blade containment system to retain broken blades or blade fragments and to prevent these broken blades or blade fragments from being ejected through the containment portion 224.

As depicted in FIG. 2A, the outer band portion 222 is integrally formed with the containment portion 224, and the frame case 220 is an integral case. The frame case 220 can be a monolithic case. Although the struts 210, the inner hub 240, or both, can be separate components fastened to the frame case 220, the struts 210 and the inner hub 240 are depicted in FIG. 2A as being integrally formed with the frame case 220, such as integrally formed with the outer band portion 222 and the containment portion 224. The struts 210, the inner hub 240, or both, can be portions of a monolithic frame with the outer band portion 222 and the containment portion 224.

The containment portion 224 can extend in the axial direction A away from the outer band portion 222 to be located as discussed above. As noted above, with such a construction, joints can be omitted from adjacent casing sections reducing the weight and the complexity of the casing structure. For example, the matrix 270 can be continuous. Similarly, the axial reinforcing fiber tows 276 can extend between adjacent sections of the frame case 220. As shown in FIG. 2A, the axial reinforcing fiber tows 276 extend from the outer band portion 222 and into the containment portion 224 providing continuous strength in the axial direction A. The outer band portion 222 and the containment portion 224 can thus be an integral composite, and the frame case 220 can be an integral composite. In a similar manner, the struts 210, the inner hub 240, or both, can be integrally formed with the frame case, such as integrally formed with the outer band portion 222 and the containment portion 224. The struts 210, the inner hub 240, or both, can be portions of the integral composite with the outer band portion 222 and the containment portion 224.

The integral frame 200 is not limited to composite materials and can be formed using other materials, including, for example, metals suitable for use in the aircraft environment. The frame case 220 can be made from materials suitable for use in high temperature environments (e.g., temperatures greater than six hundred degrees Fahrenheit (600°F)) including, for example, stainless steel, corrosion-resistant alloys of nickel and chromium, and high-strength nickel-base alloys. The frame case 220 can be formed from a metal alloy. The metal alloy can be an iron-based alloy, nickel-based alloy, cobalt-based alloy, a chromium-based alloy, or a titanium-based alloy. The frame case 220 can be made from materials suitable for use in lower temperature environments (e.g., temperatures less than four hundred degrees Fahrenheit (400°F)) including, the various metal alloys discussed above, as well as aluminum-based alloys. Various molding and forming techniques can be used to form the integral frame 200 including the integral or monolithic structures thereof, including for example, additive manufacturing techniques.

The integral frame 200 can include acoustic panels. These acoustic panels can be used and joined with the cases discussed herein, such the frame case 220 and the inner hub 240. The frame case 220 can include an outer acoustic panel 228 located on an inner side of the frame case 220. Similarly, the inner hub 240 can include an inner acoustic panel 242 located on an outer side of the frame case 220. The outer acoustic panel 228, the inner acoustic panel 242, or both can be integrally formed with the frame case 220 or the inner hub 240, respectively, such as by being positioned during the lay-up process or another step of arranging a preform when forming the integral frame 200.

In addition to the struts 210, the turbine engine 100 can include a plurality of vanes 250. In FIG. 2A, the vanes 250 are inlet vanes for the rotating airfoil assembly 260 and disposed upstream of the rotating airfoil assembly 260. More specifically, the vanes 250 shown in FIG. 2A are the inlet mid-fan vanes 196 disposed upstream of the mid-fan 190, such as disposed in the inlet duct 187 upstream of the mid-fan blades 192. The vane 250 can be arranged in the manner discussed above with the inlet mid-fan vanes 196 and that discussion can apply to other positions within the turbine engine 100 (FIG. 1). The plurality of vanes 250 is disposed downstream of the plurality of struts 210 relative to a direction of the engine air A3 through the inlet duct 187.

The vanes 250 can be static airfoils that are not rotatable about the longitudinal centerline axis 101. Although the vane 250 can be fixed pitch vanes, the vanes 250 can be variable pitch vanes, as depicted in FIG. 2A, for example, each vane 250 can be rotatable relative to the vane case portion 226 about a pitch axis. More specifically, the vane 250 can include a vane shaft 254 that supports the vane 250 and is connected to the vane case portion 226 by, for example, a pivot bearing 256 that allows rotation of the vane 250. A vane actuation system, similar to the fan guide vane actuation system 166 discussed above, can be used to change the pitch of the vane 250 and to rotate the vane shaft 254. The vane actuation system for the vane 250 can operate similarly to the fan guide vane actuation system 166, discussed above, and that discussion applies here.

The vane case portion 226 is positioned opposite the inner vane case 252 to define a portion of the inlet duct 187 therebetween. Each vane 250 can extend in the radial direction R from the inner vane case 252 to the vane case portion 226. The vane case portion 226 is disposed radially outward of the plurality of vanes 250 and extends axially over the plurality of vanes 250. With the arrangement shown in FIG. 2A, the vane case portion 226 is disposed between the outer band portion 222 and the containment portion 224. The vane case portion 226 can extend from the outer band portion 222, and the vane case portion 226 can extend from the containment portion 224. The vane case portion 226 can be integrally formed with the outer band portion 222, the containment portion 224, or both, such as by being a portion of the integral composite with the outer band portion 222, the containment portion 224, or both. In FIG. 2A, the vane case portion 226 extends from the outer band portion 222 to the containment portion 224. The vane case portion 226 is also part of the same integral composite with the outer band portion 222 and the containment portion 224, with, for example, the axial reinforcing fiber tows 276 extending from the outer band portion 222, through the vane case portion 226, and into the containment portion 224, providing continuous strength in the axial direction A. Similarly, the matrix 270 of the vane case portion 226 is continuous with the outer band portion 222 and the containment portion 224.

As noted above, the fan cowl 174 (FIG. 1) can also include the guide case 230 that also can define the inlet duct 187. The guide case 230 can be connected, such as directly connected, to the frame case 220. More specifically, the guide case 230 can be positioned adjacent to the frame case 220. In FIG. 2A, the guide case 230 defines a portion of the inlet duct 187 downstream of the frame case 220 and is disposed downstream of the integral frame 200. The guide case 230 can abut the frame case 220. More specifically, the frame case 220 can include a frame case flange 282, and the guide case 230 can include a guide case flange 232. Each of the frame case flange 282 and the guide case flange 232 can project radially outward of the frame case 220 and the guide case 230, respectively. In the arrangement shown in FIG. 2A, the frame case flange 282 is connected to the containment portion 224, such as being formed as a part of the containment portion 224. The frame case flange 282 and the guide case flange 232 can be disposed to abut each other, such as outward facing surfaces of each of the frame case flange 282 and the guide case flange 232 abutting each other. The guide case 230 can be connected to the frame case 220, such as by being fastened to the frame case 220. For example, the frame case 220 can be fastened to the guide case 230 by a fastener 290 engaging both the frame case flange 282 and the guide case flange 232. The frame case flange 282, the guide case flange 232, or both, can have holes formed therein to insert the fastener 290 therethrough. While at least one of the frame case flange 282 or the guide case flange 232 can have threads tapped therein, the fastener 290 shown in FIG. 2A is a bolt having a nut to fasten the guide case flange 232 to the frame case flange 282.

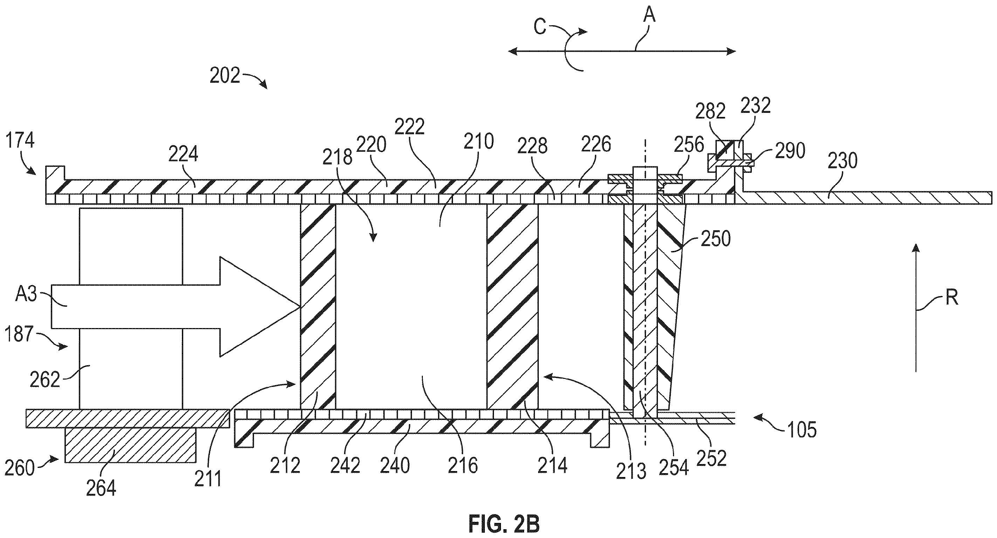

FIG. 2B is a cross-sectional view of a portion of a turbine engine taken from a perspective similar to that of detail 2A in FIG. 1. FIG. 2B shows an integral frame 202 similar to the integral frame 200 discussed above with reference to FIG. 2A. The same reference numerals are used for the same or similar components of the integral frame 202 as the integral frame 200 discussed above, and that discussion applies here. The integral frame can have various arrangements, other than those discussed above with reference to FIG. 2A. In FIG. 2B, for example, the rotating airfoil assembly 260 is disposed upstream of the plurality of struts 210 relative to a direction of the engine air A3 through the inlet duct 187. The containment portion 224 can be directly connected to the outer band portion 222 and extend therefrom in an upstream direction to be positioned axially over the rotating airfoil 262 of the rotating airfoil assembly 260.

In FIG. 2B, the plurality of vanes 250 are disposed downstream of the plurality of struts 210, in a manner similar to that discussed above with reference to FIG. 2A, but, with the rotating airfoil assembly 260 positioned upstream of the strut 210, each vane 250 of the plurality of vanes 250 is an outlet vane for the rotating airfoil assembly 260 and disposed downstream of the rotating airfoil assembly 260 relative to the flow of engine air A3 through the inlet duct 187.

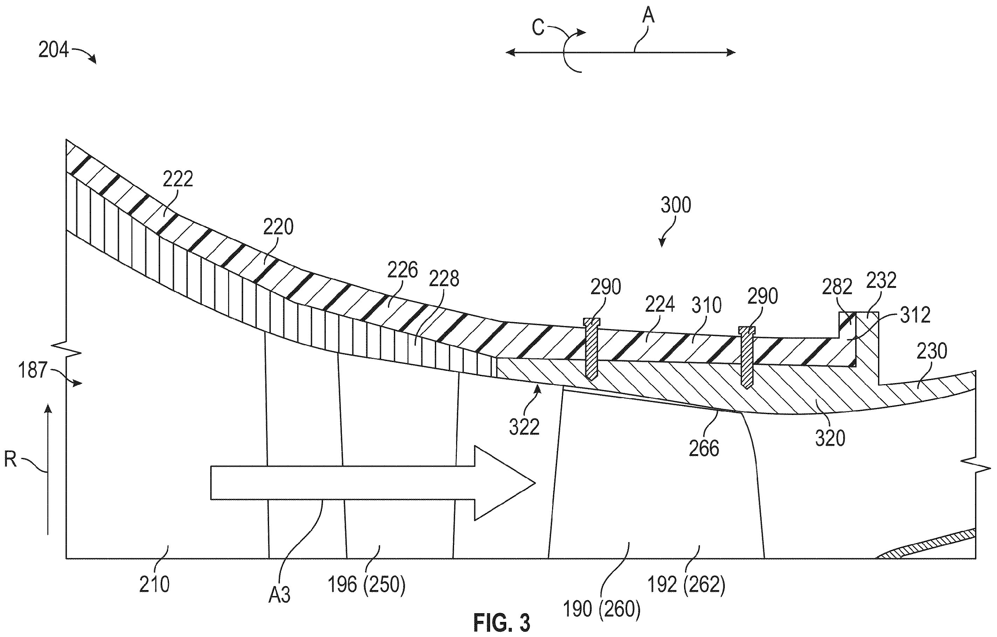

The guide case 230 and the frame case 220 can be joined together in a number of different ways and include joints other than those depicted in FIGS. 2A and 2B. For example, one joint that can be used is a joint where portions of the guide case 230 and the frame case 220 overlap each other. The overlapping joint shown herein will be referred to as a shiplap joint. FIGS. 3 to 5 show different shiplap joint configurations that can be used to join the guide case 230 with the frame case 220. The same reference numerals will be used for the same or similar components in each of FIGS. 3 to 5, and the discussion in one figure applies to the others. Similarly, although described as separate joints, the features of one shiplap joint can be incorporated in the other shiplap joints. Likewise, the fastener arrangement shown in FIGS. 2A and 2B can be used with any of the shiplap joints discussed below. The discussion of these shiplap joints is made with respect to the arrangement shown in FIG. 2A, and the shiplap joint is formed as part of the vane case portion 226 and the shiplap joint extends axially over the rotating airfoil assembly 260. The shiplap joint can thus be part of the containment structure for the rotating airfoil assembly 260, and the guide case 230 can be used as a part of the containment structure. The shiplap joint, however, can be formed in other portions of the frame case 220. As noted above, the integral frame 200 and the frame case 220 can be a composite material. The guide case 230 can be formed from a dissimilar material, such as a metal suitable for aircraft use. In such cases, the shiplap joints discussed herein can be appropriate joints for these dissimilar materials.

FIG. 3 is a cross-sectional view of a shiplap joint 300 for an integral frame 204 to join the frame case 220 with the guide case 230. The frame case 220 includes a frame case lip 310, and the guide case 230 includes a guide case lip 320. The frame case lip 310 and the guide case lip 320 are disposed or configured to overlap each other and to form the shiplap joint 300. More specifically, in the arrangement shown in FIG. 3, the frame case lip 310 is disposed radially outward of the guide case lip 320. The frame case lip 310 can be formed in the containment portion 224, and the shiplap joint 300 extends axially over the rotating airfoil assembly 260. In this way, the guide case 230 can be used to form a portion of the containment structure for the rotating airfoil assembly 260.

The frame case 220 can include a frame case distal end 312 that is distal from the plurality of struts 210. The frame case flange 282 can be formed on the frame case distal end 312. The guide case flange 232 can be formed at any location on the guide case lip 320 to provide the desired amount of overlap for the shiplap joint 300, such as the desired amount of overlap of the rotating airfoil assembly 260. The guide case flange 232 can be located downstream of the rotating airfoil assembly 260, as shown in FIG. 3, for example. The frame case flange 282 and the guide case flange 232 can be positioned to abut each other as discussed above. The frame case lip 310 and the guide case lip 320 can also be disposed to abut each other, such as with a bottom surface of the frame case lip 310 abutting an upper surface of the guide case lip 320.

The frame case lip 310 can be fastened to the guide case lip 320. As shown in FIG. 3, for example, the frame case 220 is fastened to the guide case 230 in the shiplap joint 300 with one or more fasteners 290 engaging both the frame case lip 310 and the guide case lip 320. Here, two fasteners 290 are shown extending through the integral frame case lip 310 and into the guide case lip 320.

Each rotating airfoil 262 can include a rotating airfoil tip 266. The rotating airfoil tip 266 can be tapered, as shown in FIG. 3. With the arrangement of the frame case lip 310 and the guide case lip 320 shown in FIG. 3, the guide case lip 320 is positioned adjacent to the rotating airfoil 262, such as adjacent to the rotating airfoil tip 266. The guide case lip 320 can include a guide case inner surface 322 facing the rotating airfoil assembly 260. When the rotating airfoil tip 266 is tapered, the guide case inner surface 322 can be tapered to correspond to the taper of the rotating airfoil tip 266.

FIG. 4 is a cross-sectional view of another shiplap joint 302 for an integral frame 206 to join the frame case 220 with the guide case 230. The guide case flange 232 includes a flange distal end 234. A flange projection 236 extends from the guide case flange 232. The flange projection 236 extends in a direction from the flange distal end 234 towards the frame case 220. The flange projection 236 can overlap, at least in part, with the guide case lip 320. The flange projection 236 can thus form a channel with the guide case lip 320. The frame case lip 310 and the guide case lip 320 overlap each other to form the shiplap joint 302 with the frame case lip 310 disposed between guide case lip 320 and the flange projection 236, such as within the channel, to join the frame case 220 with the guide case 230.

The guide case lip 320 includes a guide case tip 324. The guide case tip 324 shown in FIG. 4 is a stepped tip, and the frame case lip 310 includes a step 314. The stepped tip (guide case tip 324) engages with the step 314 of the frame case frame case 220 to further secure the guide case 230 with the frame case 220. Although not shown in FIG. 4, fasteners 290 (see FIGS. 2A or 3) can also be used with this shiplap joint 302 configuration.

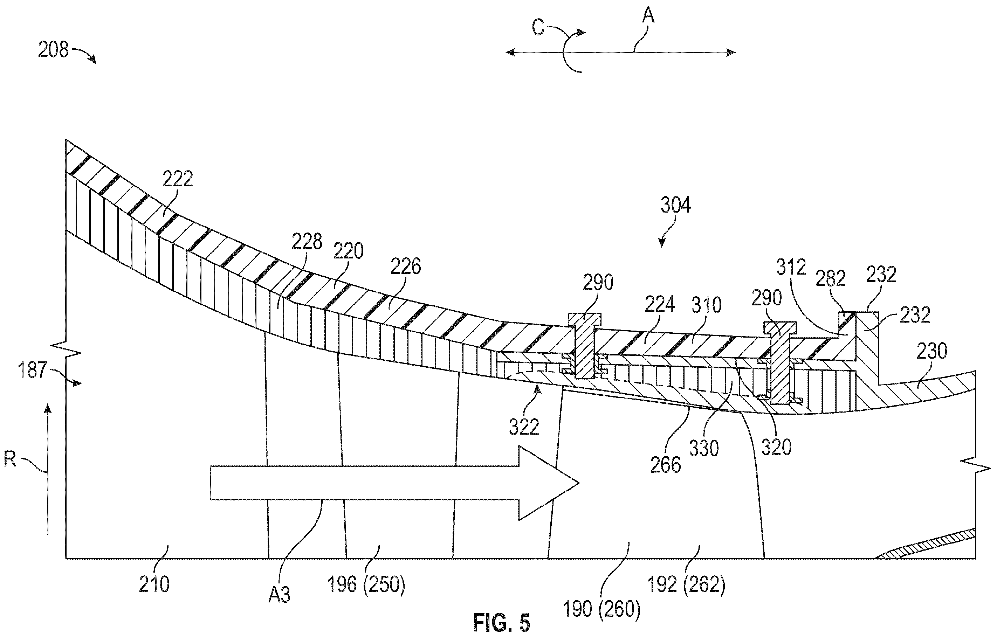

FIG. 5 is a cross-sectional view of another shiplap joint 304 for an integral frame 208 to join the frame case 220 with the guide case 230. Acoustic panels can be used and joined with the cases discussed herein, such as the frame case 220. The shiplap joint 304 in FIG. 5 also includes an acoustic panel, which is referred to herein as a shiplap acoustic panel 330. The shiplap acoustic panel 330 is positioned radially inward of the frame case lip 310, the guide case lip 320, or both.

The integral frames 200 and 202 discussed herein include an integral case (e.g., the frame case 220). The frame case 220 can be formed from a composite material as an integral composite. Not only does the composite material reduce the weight of the frame, the integral assembly reduces complexity, the number of joints, and the corresponding weight from these joints. The composite materials used herein can enable such an integral frame to be formed. Various connections of the integral composite case 220 with adjacent cases structures, such as the guide case 230, are also disclosed herein. The joints, such as the shiplap joints 300, 302, and 304, can provide good joint structure, particularly, when dissimilar materials are used, and can also be positioned to provide a combined containment structure for a rotating airfoil assembly 260.

Further aspects of the present disclosure are provided by the subject matter of the following clauses.

A turbine engine for an aircraft has an axial direction and a radial direction. The turbine engine includes a rotating airfoil assembly and an integral frame. The rotating airfoil assembly includes a plurality of rotating airfoils collectively rotatable about a rotational axis. The integral frame includes an inner hub, a frame case having an outer band portion and a containment portion integrally formed with the outer band portion, and a plurality of struts connecting the inner hub with the outer band portion. The outer band portion is opposite the inner hub to form an air flow path therebetween. The containment portion extends in the axial direction away from the outer band portion. The containment portion is positioned radially outward of the plurality of rotating airfoils and extending axially over the plurality of rotating airfoils. Each strut of the plurality of struts extends in the radial direction and is positioned within the air flow path.

The turbine engine of the preceding clause, wherein the rotating airfoil assembly is disposed upstream, relative to a direction of airflow through the air flow path, of the plurality of struts.

The turbine engine of any preceding clause, wherein the rotating airfoil assembly is disposed downstream, relative to a direction of airflow through the air flow path, of the plurality of struts.

The turbine engine of any preceding clause, wherein the inner hub and the plurality of struts are integrally formed with the outer band portion and the containment portion.

The turbine engine of any preceding clause, further including a plurality of vanes.

The turbine engine of the preceding clause, wherein the integral frame further includes a vane case portion, the vane case portion being disposed radially outward of the plurality of vanes and extending axially over the plurality of vanes, the vane case portion being integrally formed with the outer band portion and the containment portion.

The turbine engine of any preceding clause, wherein each vane of the plurality of vanes is an outlet vane for the rotating airfoil assembly.

The turbine engine of any preceding clause, wherein each vane of the plurality of vanes is an inlet vane for the rotating airfoil assembly.

The turbine engine of any preceding clause, wherein the plurality of vanes is disposed downstream, relative to a direction of airflow through the air flow path, of the plurality of struts.

The turbine engine of any preceding clause, wherein the rotating airfoil assembly is disposed upstream, relative to a direction of airflow through the air flow path, of the plurality of struts.

The turbine engine of any preceding clause, wherein the rotating airfoil assembly is disposed downstream, relative to a direction of airflow through the air flow path, of the plurality of struts.

The turbine engine of any preceding clause, wherein the vane case portion is disposed between the outer band portion and the containment portion.

The turbine engine of any preceding clause, further including a guide case defining a portion of the air flow path, the guide case being positioned adjacent to the frame case and fastened thereto.

The turbine engine of any preceding clause, wherein the frame case includes a frame case flange.

The turbine engine of any preceding clause, wherein the guide case includes a guide case flange.

The turbine engine of any preceding clause, wherein the guide case flange abutting the frame case flange.

The turbine engine of any preceding clause, wherein the frame case is fastened to the guide case with a fastener engaging both the frame case flange and the guide case flange.

The turbine engine of any preceding clause, wherein the frame case includes a frame case distal end that is distal from the plurality of struts, the frame case flange being formed on the frame case distal end.

The turbine engine of any preceding clause, wherein the guide case includes a guide case lip.

The turbine engine of any preceding clause, wherein the frame case includes a frame case lip.

The turbine engine of the preceding clause, wherein the guide case lip and the frame case lip overlap each other to form a joint.

The turbine engine of the preceding clause, wherein the joint is a shiplap joint.

The turbine engine of any preceding clause, the guide case flange including a flange distal end and a flange projection extending from the flange distal end.

The turbine engine of the preceding clause, wherein the guide case lip and the frame case lip overlapping each other to form a joint with the frame case lip disposed between guide case lip and the flange projection.

The turbine engine of any preceding clause, wherein the guide case lip includes a tip, the tip being a stepped tip.

The turbine engine of the preceding clause, wherein the frame case lip includes a step, the stepped tip of the guide case lip engaging with the step of the frame case.

The turbine engine of any preceding clause, wherein the frame case is fastened to the guide case in the joint with a fastener engaging both the frame case lip and the guide case lip.

The turbine engine of any preceding clause, wherein the frame case lip is formed in the containment portion, and the joint extends axially over the rotating airfoil assembly.

The turbine engine of any preceding clause, wherein the joint includes an acoustic panel.

The turbine engine of any preceding clause wherein the frame case lip is disposed radially outward of the guide case lip.

The turbine engine of any preceding clause, wherein each rotating airfoil of the plurality of rotating airfoils is tapered in the axial direction, and

The turbine engine of the preceding clause, wherein the guide case lip has an underside that is tapered to correspond to the taper of each rotating airfoil of the plurality of rotating airfoils.

The turbine engine of any preceding clause, wherein the outer band portion and the containment portion are an integral composite having a plurality of reinforcing fibers embedded in a matrix.

The turbine engine of any preceding clause, wherein the inner hub and the plurality of struts are portions of the integral composite with the outer band portion and the containment portion.

The turbine engine of any preceding clause, further comprising a plurality of vanes, wherein the integral frame further includes a vane case portion, the vane case portion being disposed radially outward of the plurality of vanes and extending axially over the plurality of vanes, the vane case portion being a portion of the integral composite with the outer band portion and the containment portion.

A turbine engine for an aircraft, the turbine engine having an axial direction and a radial direction, the turbine engine comprising: a rotating airfoil assembly including a plurality of rotating airfoils collectively rotatable about a rotational axis; and an integral frame including: an inner hub; a frame case having an outer band portion and a containment portion integrally formed with the outer band portion, the outer band portion opposite the inner hub to form an air flow path therebetween, the containment portion extending in the axial direction away from the outer band portion, and being positioned radially outward of the plurality of rotating airfoils and extending axially over the plurality of rotating airfoils; and a plurality of struts connecting the inner hub with the outer band portion, each struct of the plurality of struts extending in the radial direction and positioned within the air flow path.

The turbine engine of any preceding clause, wherein the rotating airfoil assembly is disposed upstream, relative to a direction of airflow through the air flow path, of the plurality of struts.

The turbine engine of any preceding clause, wherein the rotating airfoil assembly is disposed downstream, relative to a direction of airflow through the air flow path, of the plurality of struts.

The turbine engine of any preceding clause, further comprising a plurality of vanes, each vane of the plurality of vanes being an outlet vane for the rotating airfoil assembly, the plurality of vanes being disposed downstream, relative to a direction of airflow through the air flow path, of the plurality of struts, wherein the integral frame further includes a vane case portion, the vane case portion being disposed radially outward of the plurality of vanes and extending axially over the plurality of vanes, the vane case portion being integrally formed with the outer band portion and the containment portion, and wherein the rotating airfoil assembly is disposed upstream, relative to a direction of airflow through the air flow path, of the plurality of struts.

The turbine engine of any preceding clause, further comprising a plurality of vanes, wherein the integral frame further includes a vane case portion, the vane case portion being disposed radially outward of the plurality of vanes and extending axially over the plurality of vanes, the vane case portion being integrally formed with the outer band portion and the containment portion, and wherein the vane case portion is disposed between the outer band portion and the containment portion.

The turbine engine of any preceding clause, wherein the rotating airfoil assembly is disposed downstream, relative to a direction of airflow through the air flow path, of the plurality of struts, and wherein each vane of the plurality of vanes is an inlet vane for the rotating airfoil assembly.

The turbine engine of any preceding clause, wherein the outer band portion and the containment portion are an integral composite having a plurality of reinforcing fibers embedded in a matrix.

The turbine engine of any preceding clause, wherein the inner hub and the plurality of struts are portions of the integral composite with the outer band portion and the containment portion.

The turbine engine of any preceding clause, further comprising a plurality of vanes, wherein the integral frame further includes a vane case portion, the vane case portion being disposed radially outward of the plurality of vanes and extending axially over the plurality of vanes, the vane case portion being a portion of the integral composite with the outer band portion and the containment portion.

The turbine engine of any preceding clause, further comprising a guide case defining a portion of the air flow path, the guide case being positioned adjacent to the frame case and fastened thereto.

The turbine engine of any preceding clause, wherein the frame case includes a frame case flange, and the guide case includes a guide case flange, the frame case being fastened to the guide case with a fastener engaging both the frame case flange and the guide case flange.

The turbine engine of any preceding clause, wherein the frame case includes a frame case flange, and the guide case includes a guide case flange, the guide case flange abutting the frame case flange, and wherein the frame case includes a frame case distal end that is distal from the plurality of struts, the frame case flange being formed on the frame case distal end.

The turbine engine of any preceding clause, wherein the guide case includes a guide case flange, the guide case flange including a flange distal end and a flange projection extending from the flange distal end, and wherein the guide case includes a guide case lip and the frame case includes a frame case lip, the guide case lip and the frame case lip overlapping each other to form a joint with the frame case lip disposed between guide case lip and the flange projection.

The turbine engine of any preceding clause, wherein the guide case lip includes a tip, the tip being a stepped tip, and wherein the frame case lip includes a step, the stepped tip of the guide case lip engaging with the step of the frame case.

The turbine engine of any preceding clause, wherein the guide case includes a guide case lip and the frame case includes a frame case lip, the guide case lip and the frame case lip overlapping each other to form a joint.

The turbine engine of any preceding clause, wherein the frame case is fastened to the guide case in the joint with a fastener engaging both the frame case lip and the guide case lip.

The turbine engine of any preceding clause, wherein the frame case lip is formed in the containment portion, and the joint extends axially over the rotating airfoil assembly.

The turbine engine of any preceding clause, wherein the joint includes an acoustic panel.

The turbine engine of any preceding clause, wherein the frame case lip is disposed radially outward of the guide case lip.

The turbine engine of any preceding clause, wherein each rotating airfoil of the plurality of rotating airfoils is tapered in the axial direction, and wherein the guide case lip has an underside that is tapered to correspond to the taper of each rotating airfoil of the plurality of rotating airfoils.

Although the foregoing description is directed to certain embodiments, other variations and modifications will be apparent to those skilled in the art, and may be made without departing from the disclosure. Moreover, features described in connection with one embodiment may be used in conjunction with other embodiments, even if not explicitly stated above.

## Claims

1. A turbine engine (100) for an aircraft, the turbine engine (100) having an axial direction and a radial direction, the turbine engine (100) comprising:
a rotating airfoil assembly (260) including a plurality of rotating airfoils (262) collectively rotatable about a rotational axis; and
an integral frame (200, 202, 204, 206, 208) including:
an inner hub (240);
a frame case (220) having an outer band portion (222) and a containment portion (224) integrally formed with the outer band portion (222), the outer band portion (222) opposite the inner hub (240) to form an air flow path (187) therebetween, the containment portion (224) extending in the axial direction away from the outer band portion (222), and being positioned radially outward of the plurality of rotating airfoils (262) and extending axially over the plurality of rotating airfoils (262); and
a plurality of struts (210) connecting the inner hub (240) with the outer band portion (222), each strut (210) of the plurality of struts (210) extending in the radial direction and positioned within the air flow path (187).

2. The turbine engine (100) of claim 1, wherein the rotating airfoil assembly (260) is disposed upstream, relative to a direction of airflow through the air flow path (187), of the plurality of struts (210), or
wherein the rotating airfoil assembly (260) is disposed downstream, relative to a direction of airflow through the air flow path (187), of the plurality of struts (210).

3. The turbine engine (100) of claim 1 or 2, further comprising a plurality of vanes (250), the integral frame (200, 202, 204, 206, 208) further including a vane case portion (226), the vane case portion (226) being disposed radially outward of the plurality of vanes (250) and extending axially over the plurality of vanes (250), the vane case portion (226) being integrally formed with the outer band portion (222) and the containment portion (224),
wherein each vane (250) of the plurality of vanes (250) being an outlet vane for the rotating airfoil assembly (260), or
wherein each vane (250) of the plurality of vanes (250) is an inlet vane for the rotating airfoil assembly (260).

4. The turbine engine (100) of claim 1 or 2, further comprising a plurality of vanes (250),
wherein the integral frame (200, 204, 206, 208) further includes a vane case portion (226), the vane case portion (226) being disposed radially outward of the plurality of vanes (250) and extending axially over the plurality of vanes (250), the vane case portion (226) being integrally formed with the outer band portion (222) and the containment portion (224), and
wherein the vane case portion (226) is disposed between the outer band portion (222) and the containment portion (224).

5. The turbine engine (100) of any one of claims 1 to 4, further comprising a guide case (230) defining a portion of the air flow path (187), the guide case (230) being positioned adjacent to the frame case (220) and fastened thereto,
wherein the frame case (220) includes a frame case flange (282), and the guide case (230) includes a guide case flange (232), the frame case (220) being fastened to the guide case (230) with a fastener (290) engaging both the frame case flange (282) and the guide case flange (232).

6. The turbine engine (100) of any one of claims 1 to 5, further comprising a guide case (230) defining a portion of the air flow path (187), the guide case (230) being positioned adjacent to the frame case (220) and fastened thereto,
wherein the frame case (220) includes a frame case flange (282), and the guide case (230) includes a guide case flange (232), the guide case flange (232) abutting the frame case flange (282), and
wherein the frame case (220) includes a frame case distal end (312) that is distal from the plurality of struts (210), the frame case flange (282) being formed on the frame case distal end (312).

7. The turbine engine (100) of any one of claims 1 to 6, further comprising a guide case (230) defining a portion of the air flow path (187), the guide case (230) being positioned adjacent to the frame case (220) and fastened thereto,
wherein the guide case (230) includes a guide case flange (232), the guide case flange (232) including a flange distal end (234) and a flange projection (236) extending from the flange distal end (234), and
wherein the guide case (230) includes a guide case lip (320) and the frame case (220) includes a frame case lip (310), the guide case lip (320) and the frame case lip (310) overlapping each other to form a joint (302) with the frame case lip (310) disposed between guide case lip (320) and the flange projection (236).

8. The turbine engine (100) of claim 7, wherein the guide case lip (320) includes a tip (324), the tip (324) being a stepped tip (324), and
wherein the frame case lip (310) includes a step (314), the stepped tip (324) of the guide case lip (320) engaging with the step (314) of the frame case (220).

9. The turbine engine (100) of any one of claims 1 to 8, wherein the outer band portion (222) and the containment portion (224) are an integral composite having a plurality of reinforcing fibers (272) embedded in a matrix (270).

10. The turbine engine (100) of claim 9, wherein the inner hub (240) and the plurality of struts (210) are portions of the integral composite with the outer band portion (222) and the containment portion (224), and/or
wherein the turbine engine (100) further comprises a plurality of vanes (250), wherein the integral frame further includes a vane case portion (226), the vane case portion (226) being disposed radially outward of the plurality of vanes (250) and extending axially over the plurality of vanes (250), the vane case portion (226) being a portion of the integral composite with the outer band portion (222) and the containment portion (224).

11. The turbine engine (100) of any one of claims 1 to 10, wherein the guide case (230) includes a guide case lip (320) and the frame case (220) includes a frame case lip (310), the guide case lip (320) and the frame case lip (310) overlapping each other to form a joint (300, 302, 304).

12. The turbine engine (100) of claim 11, wherein the frame case (220) is fastened to the guide case (230) in the joint with a fastener (290) engaging both the frame case lip (310) and the guide case lip (320).

13. The turbine engine (100) of claim 11 or 12, wherein the frame case lip (310) is formed in the containment portion (224), and the joint extends axially (300, 302, 304) over the rotating airfoil assembly (260).

14. The turbine engine (100) of claim 13, wherein the joint (304) includes an acoustic panel (330), and/or
wherein the frame case lip (310) is disposed radially outward of the guide case lip (320).

15. The turbine engine of claim 13 or 14, wherein each rotating airfoil (262) of the plurality of rotating airfoils (262) is tapered in the axial direction, and
wherein the frame case lip (310) is disposed radially outward of the guide case lip (320), the guide case lip (320) having an underside (322) that is tapered to correspond to the taper of each rotating airfoil (262) of the plurality of rotating airfoils (262).
